# EUROPÄISCHE PATENTSCHRIFT

(11) **EP 0 696 386 B1**
(45) Veröffentlichungstag und Bekanntmachung des Hinweises auf die Patenterteilung: **25.06.1997**
(21) Anmeldenummer: 94912465.5
(22) Anmeldetag: 18.04.1994
(51) Int. Cl.: H01M 8/12

(54) **HOCHTEMPERATURBRENNSTOFFZELLE MIT VERBESSERTER FESTELEKTROLYT/ELEKTRODEN-GRENZFLÄCHE UND VERFAHREN ZUR HERSTELLUNG DER GRENZFLÄCHE**
HIGH-TEMPERATURE FUEL CELL WITH IMPROVED SOLID ELECTROLYTE/ELECTRODE CONTACT SURFACE, AND METHOD OF PRODUCING THE CONTACT SURFACE
PILE A COMBUSTIBLE HAUTE TEMPERATURE A SURFACE DE CONTACT ELECTROLYTE SOLIDE/ELECTRODES AMELIOREE ET PROCEDE DE REALISATION DE LA SURFACE DE CONTACT

(30) Priorität: 30.04.1993 DE 4314323
(43) Veröffentlichungstag der Anmeldung: 14.02.1996
(73) Patentinhaber: SIEMENS AKTIENGESELLSCHAFT, 80333 München (DE)
(72) Erfinder: WERSING, Wolfram, D-85551 Kirchheim (DE); IVERS-TIFFEE, Ellen, D-81245 München (DE); LANDES, Harald, D-90607 Rückersdorf (DE); MÄNNER, Ruth, D-85667 Oberpframmern (DE); NÖLSCHER, Christoph, D-90419 Nürnberg (DE); SCHMIDT, Harald, D-81739 München (DE); SCHNÖLLER, Manfred, D-85778 Haimhausen (DE)
(86) Internationale Anmeldenummer: DE9400425
(87) Internationale Veröffentlichungsnummer: WO9425994

(56) Entgegenhaltungen:
- EP-A- 0 439 938
- DE-A- 3 922 673
- FR-A- 1 513 796
- US-A- 3 442 713
- US-A- 4 477 487
- US-A- 4 957 673
- US-A- 5 035 961
- CHEMICAL ABSTRACTS, vol. 116, no. 16, 20. April 1992, Columbus, Ohio, US; abstract no. 155497e, YOSHIDA ET AL 'High-temperature solid-electrolyte fuel cells'
- PATENT ABSTRACTS OF JAPAN vol. 15, no. 371 (E-1113) 18. September 1991 & JP,A,03 147 264 (SANYO ELECTRIC CO LTD) 24. Juni 1991
- PATENT ABSTRACTS OF JAPAN vol. 15, no. 371 (E-1113) 18. September 1991 & JP,A,03 147 268 (SANYO ELECTRIC CO LTD) 24. Juni 1991
- PATENT ABSTRACTS OF JAPAN vol. 15, no. 348 (E-1107) 4. September 1991 & JP,A,03 134 963 (FUJI ELECTRIC CO LTD) 7. Juni 1991
- PATENT ABSTRACTS OF JAPAN vol. 15, no. 277 (E-1089) 15. Juli 1991 & JP,A,03 095 864 (FUJIKURA LTD) 22. April 1991
- PATENT ABSTRACTS OF JAPAN vol. 16, no. 513 (E-1283) 22. Oktober 1992 & JP,A,04 190 564 (TOKYO GAS CO LTD) 8. Juli 1992
- PATENT ABSTRACTS OF JAPAN vol. 16, no. 336 (E-1237) 21. Juli 1992 & JP,A,04 101 361 (SANYO ELECTRIC CO LTD) 2. April 1992
- PATENT ABSTRACTS OF JAPAN vol. 15, no. 506 (E-1148) 20. Dezember 1991 & JP,A,03 222 206 (MATSUSHITA ELECTRIC IND CO) 1. Oktober 1991
- CHEMICAL ABSTRACTS, vol. 113, no. 12, 17. September 1990, Columbus, Ohio, US; abstract no. 100909y, MIHARA, HIROSHI ET AL 'Solid-electrolyte fuel-cell electrode units, their manufacture and the fuel cells'

## Beschreibung

In einer Hochtemperatur-Festelektrolyt-Brennstoffzelle wird die Verbrennungsreaktion eines gasförmigen Brennstoffs mit Luft elektrochemisch durchgeführt. Die Redoxreaktion findet in der Nähe des beidseitig mit Elektroden versehenen Feststoffelektrolyten statt. Brennstoffmoleküle werden durch Abgabe von Elektronen oxidiert, während der Sauerstoff auf der anderen Seite des Festelektrolyts durch Aufnahme durch Elektronen reduziert wird. Der Festelektrolyt trennt die Reaktionspartner, verhindert den elektrischen Kurzschluß und sorgt für einen Stoffausgleich, da er eine hohe Leitfähigkeit für Ionen bei gleichzeitig niedriger Leitfähigkeit für Elektronen aufweist.

Bekannte Hochtemperaturbrennstoffzellen besitzen einen Festelektrolyten aus voll stabilisiertem Yttrium stabilisierten Zirkonoxid (YSZ), das bei ca. 950°C eine ausreichende Ionenleitfähigkeit aufweist, bei der die Brennstoffzelle mit hinreichend niedrigen inneren Verlusten betrieben werden kann.

Um am Arbeitspunkt der Brennstoffzelle eine über die Potentialdifferenz einer einzelnen Zelle hinausgehende Betriebsspannung zu erhalten, werden mehrere Brennstoffzellen in Reihe geschaltet. Im planaren Brennstoffzellenstapelkonzept geschieht dies in einfacher Weise durch Übereinanderstapeln einzelner Brennstoffzellen, wobei dazwischenliegende bipolare Schichten und Platten aus einem sogenannten ICM-Material (Inter Connection Material) die Abdichtung der Gasräume und die elektrische Verbindung zwischen zwei benachbarten Einzelzellen gewährleisten.

Aus der US-A 3 442 713 ist eine Brennstoffzelle bekannt, bei der zwischen YSZ-Festelektrolyt und Metallelektrode eine poröse Zwischenschicht aus YSZ aufgebracht ist.

Aus der FR-A 1 51 37 96 ist eine Festelektrolytbrennstoffzelle bekannt, die eine aus YSZ bestehende poröse Zwischenschicht zwischen Elektrolyt und Elektrode aufweist.

Aus der JP-A-131 38 56 ist eine Festelektrolytbrennstoffzelle bekannt, bei der die Elektrolytfolie Vertiefungen zur Aufnahme der Elektroden aufweist.

Aus der JP-A 41 90 564 ist eine Festelektrolytbrennstoffzelle bekannt, bei der die Oberfläche des flachen Elektrolyten durch Aufsintern von weiterem Elektrolytmaterial vergrößert wird.

Aus der JP-A-314 72 68 ist eine Festelektrolytbrennstoffzelle bekannt, bei der durch Ätzen des flachen Elektrolyten eine rauhe Oberfläche am Elektrolyten erzeugt wird.

Bei der Verwirklichung des planaren Brennstoffzellenkonzepts treten noch einige wesentliche Probleme auf, die einen wirtschaftlichen Einsatz von Hochtemperaturbrennstoffzellen bislang erschweren. So liegt ein Problem beispielsweise in der Auswahl der für die Brennstoffzellen verwendeten Materialien, die den hohen Betriebstemperaturen bis ca. 1100°C bei gleichzeitig hohen Drücken des Brennstoffgases bzw. des zur Verbrennung benötigten Sauerstoffs von bis zu 16 Bar standhalten müssen. Durch die hohen Betriebstemperaturen setzen vor allem an den Grenzflächen zwischen zwei benachbarten Schichten unterschiedlicher Zusammensetzung chemische und physikalische Prozesse ein, die die Langzeitstabilität der Hochtemperaturbrennstoffzelle gefährden. Durch Interdiffusion zwischen einzelnen Schichten verändert sich die chemische Zusammensetzung der Schichtmaterialien und dadurch auch deren Eigenschaften. Durch Sinter- und Rekristallisationsprozesse vor allem in dem als Anodenmaterial eingesetzten Cermet (= Ceramic Metal) reduziert sich sowohl die elektrochemische Aktivität als auch die Stabilität bzw. Lebensdauer der Hochtemperaturbrennstoffzelle.

Ein weiteres Problem besteht darin, sowohl einzelne Brennstoffzellen als auch ganze Brennstoffzellenstapel gegenüber der hohen Betriebstemperaturen und dem hohen Druck gasdicht zusammenzufügen.

Aufgabe der vorliegenden Erfindung ist es daher, eine Hochtemperaturbrennstoffzelle mit erhöhter Langzeitstabilität, höherer Stromdichte und gasdichter Fügbarkeit anzugeben.

Diese Aufgabe wird erfindungsgemäß gelöst durch eine Hochtemperaturbrennstoffzelle nach Anspruch 1, die insbesondere eine spezielle Zwischenschicht zwischen Elektrolytschicht und Elektrodenschicht aufweist. Ein Verfahren zur Herstellung eines Mehrschichtaufbaus mit einer solchen Zwischenschicht ist in Anspruch 3 angegeben. Weitere Ausgestaltungen der Erfindung sind den Unteransprüchen zu entnehmen.

Mit der Erfindung wird die effektive und elektrochemisch aktive Grenzfläche zwischen der Elektrolytschicht und einer Elektrodenschicht verbessert, und eine Reihe der dort auftretenden Probleme gelöst. Wesentlicher Gedanke der Erfindung ist es dabei, die Grenzfläche zwischen den Schichten durch geeignete Maßnahmen zu vergrößern. Bislang war man stets bestrebt, die Oberfläche der Elektrolytschicht ebenso wie die anderer Schichten möglichst glatt zu gestalten, um eine gute Zusammenfügbarkeit dieser Schichten zum Brennstoffzellenstapel zu erreichen. Mit der glatten Oberfläche sollte auch die Grenzfläche möglichst gering gehalten werden, um die Grenzflächenprobleme zu reduzieren. Die Erfindung bietet nun eine Hochtemperturbrennstoffzelle an, bei der die genannten Probleme in überraschenderweise durch eine Zwischenschicht mit vergrößerter Grenzfläche gelöst sind.

In der Erfindung wird die effektive Grenzfläche durch eine ionenleitende Zwischenschicht geeigneter Geometrie vergrößert. Eine solche Zwischenschicht kann beispielsweise eine rauhe oder poröse Oberfläche aufweisen.

Für die Zwischenschicht sind ionenleitende Materialien geeignet, die für sich als ausschließliches Material für die Elektrolytschicht ungeeignet wären. So kann die Zwischenschicht aus mit Titan oder Niob dotiertem Zirkonoxid bestehen. Auch mit Niob dotiertes Ceroxid ist insbesondere für die Anodenseite geeignet.

Eine besonders effektive Grenzfläche zwischen Elektrolyt- und Anodenschicht wird mit einer porösen Zwischenschicht aus YSZ erzielt, die bereits Anodeneigenschaften aufweist und zum Beispiel in den Poren mit Nickel imprägniert oder beschichtet ist.

In entsprechender Weise kann die Zwischenschicht auf der Kathodenseite der Elektrolytschicht aus einer dünnen (Dicke ca. 1 bis 3 µm) und gasdichten Schicht aus ionenleitendem Kathodenmaterial bestehen.

Bei der Verwendung der Zwischenschicht mit vergrößerter Oberfläche kann wie bisher eine Elektrolytschicht mit glatter Oberfläche eingesetzt werden, da die zusätzliche Grenzfläche allein von der Zwischenschicht zur Verfügung gestellt wird.

In der Anodenschicht und vor allem an der Grenzfläche zwischen Elektrolyt- und Anodenschicht ist die Anzahl der Tripelpunkte für die Effektivität der elektrochemischen Umsetzung von Bedeutung. Tripelpunkte sind die Orte, an denen ein Gasvolumen in Kontakt mit Bereichen elektronischer und ionischer Leitung tritt. Tripelpunkte befinden sich daher stets an einer (auch inneren) Oberfläche des Cermets und dort an der Grenzfläche zwischen Keramik und Metall. Rekristallisationsprozesse können bei thermischer Belastung der Cermets zur Vergrößerung der Körner und damit zur Verringerung der Anzahl der Tripelpunkte führen. Die Anzahl der Tripelpunkte nimmt mit der Erfindung langsamer oder überhaupt nicht ab und erhöht so die Langzeitstabilität der inneren Struktur am Elektrolyt und dessen Grenzflächen, so daß auch ein dadurch bedingter Leistungsabfall der gesamten Brennstoffzellen während der Betriebsdauer vermindert oder gar ausgeschlossen wird.

Die beste Lösung stellt jedoch eine Zwischenschicht dar, die eine große Oberfläche aufweist und sowohl elektronisch als auch ionisch leitend ist. Ein jeder Punkt der Oberfläche einer solchen Zwischenschicht ist dabei einem Tripelpunkt gleichwirkend. Ein Material, das sowohl ionisch als auch elektronisch leitend ist, ist beispielsweise mit Gadolinium dotiertes Ceroxid.

Die Mittel zur Vergrößerung der Grenzfläche können sowohl an der Grenzfläche zur Anodenschicht, als auch - aus einem anderen geeigneten Material bestehend - an der Grenzfläche zur Kathodenschicht, oder an beiden Grenzflächen vorgesehen sein.

Die Zwischenschicht wird durch bekannte Methoden auf der Elektrolytschicht aufgebracht. Pulverförmige Ausgangsmaterialien für die Zwischenschicht werden mit einem Binder zu einer druckfähigen Paste verarbeitet und beispielsweise mit Hilfe eines Siebdruckverfahrens auf der Elektrolytschicht aufgebracht. Die gewünschte Porosität bzw. Oberflächenrauhigkeit kann durch Vermischen der pulverartigen Ausgangssubstanzen mit beispielsweise aus Kunststoff bestehenden Kügelchen erreicht werden, welche beim Sintern ausbrennen, wobei Poren in der Größe der Kügelchen in der Keramikschicht verbleiben. Möglich ist es auch, den Anteil des Binders so zu bemessen, daß beim Sintern einer aufgedruckten oder anderweitig aufgebrachten Paste eine poröse (Zwischen-) Schicht verbleibt.

Eine weitere Möglichkeit zur Herstellung einer porösen Zwischenschicht besteht darin, diese im Sol/Gel-Verfahren aufzubringen. Das die Komponenten der Zwischenschicht in gelöster Form enthaltende Sol wird durch bekannte Verfahren, beipsielsweise durch Spin Coating oder durch Sprühbeschichten aufgebracht. Eine entsprechend dünne als Sol aufgebrachte Schicht läßt sich aufgrund des Volumenschwunds beim Calzinieren bzw. beim Sintern ebenfalls in eine poröse Schicht überführen.

Eine weitere Möglichkeit besteht darin, die Zwischenschicht mittels eines EVD-Verfahrens aufzubringen.

Alle Aufbringverfahren für die Zwischenschicht werden auf eine noch ungesinterte Keramikfolie für die Elektrolytschicht aufgebracht und getrennt oder gemeinsam mit den Elektroden gesintert.

Eine für die Anodenseite der Elektrolytschicht geeignete Zwischenschicht besteht beispielsweise aus einer aktivierten oder stabilisierten Zirkonoxidschicht, die beispielsweise mit Titan oder Niob dotiert ist, mit den angegebenen Verfahren porös erzeugt und nachträglich in den Poren mit Nickel imprägniert ist. Diese Imprägnierung kann durch chemische oder elektrochemische Abscheidung erfolgen. Besonders einfach ist eine solche Abscheidung, wenn in der porösen Zirkonoxidschicht bereits metallische Keime vorhanden sind, beispielsweise Nickelpartikel. Die Keime können beliebig klein und auch aus anderen Metallen, beispielsweise aus Palladium bestehen. Über die Abscheidung werden die Keime verstärkt.

Eine weitere Möglichkeit der Imprägnierung ist durch chemische Abscheidung aus der Gasphase durch Zersetzung einer flüchtigen Nickelverbindung, oder auch aus einer Nickelsuspension möglich.

Auf die so mit Nickel imprägnierte Zwischenschicht über der Elektrolytschicht wird in bekannter Weise anschließend das Anodencermet abgeschieden, beispielsweise durch ein Siebdruckverfahren.

Um die Struktur dieser bereits metallisches Nickel enthaltenden Zwischenschicht zu erhalten und nicht unnötig durch einen Redoxprozeß zu belasten, wird erfindungsgemäß das Einbrennen der Anode und der getrennt oder gemeinsam aufgebrachten Kathode nicht in Sauerstoff oder Luft, sondern in einer Atmosphäre mit geringerem Sauerstoffpartialdruck durchgeführt. Um dabei jedoch nicht die Kathodenschicht zu schädigen, sollte der Sauerstoffpartialdruck gleich oder größer als 10⁻¹⁰ MPa betragen. Damit wird erreicht, daß die Nickel/YSZ-Grenzflächen im Bereich der Zwischenschicht nicht durch eine vollständige Oxidation des Nickels zu Nickeloxid beim Einbrennen und durch die anschließende Reduktion beim Betrieb der Hochtemperaturbrennstoffzelle verschlechtert werden.

In einem weiteren Aspekt der Erfindung erfolgt das Aufbringen der porösen Zwischenschicht nach dem Aufbringen der Elektrodenschicht. Da die Elektrodenschicht gasdurchlässig und daher porös ist, ist es problemlos möglich, beispielsweise ein für die Zwischenschicht geeignete Komponenten enthaltendes Sol auf eine bereits gesinterte Elektrodenschicht aufzutropfen, welches bis zur dichten Elektrolytschicht eindringen kann. In einem Spin-Coating-Verfahren wird das Sol gleichmäßig an der Grenzfläche Elektrolyt-/Elektrodenschicht verteilt. Bei entsprechender Bemessung der Menge an Sol kann eine so dünne Sol/Gel-Schicht erzeugt werden, die in dem anschließenden Calzinierungs- und Sinterprozeß aufgrund des Volumenschwunds aufreißt und dabei porös wird.

Mit jeder der genannten und beschriebenen Zwischenschichten, die entweder porös und/oder oberflächlich aufgerauht, oder auf der Oberfläche mit einer topologischen Struktur versehen sind, wird beim Zusammenfügen der Hochtemperaturbrennstoffzelle ein weiterer Vorteil erzielt. Dazu ist es erforderlich, zwar die Zwischenschicht, nicht aber die darüber aufgebrachte Elektrodenschicht im Randbereich der die Elektrolytschicht bildenden Keramikplatte aufzubringen. Diese von Elektrodenmaterial freibleibenden Randbereiche bilden den Fügerand der Hochtemperaturbrennstoffzelle, der zur Abdichtung mit einem Glaslot beschichtet wird. Dieses ist eine Glaspartikel enthaltende sinterfähige Paste, die in ihrer Zusammensetzung so eingestellt ist, daß sie das Material der Zwischenschicht gut benetzt. Beim abschließenden Zusammensintern der Bestandteile der Hochtemperaturbrennstoffzelle, wozu neben der mit Elektroden beschichteten Elektrolytschicht noch Gastransportschichten und bipolare Platten zur Trennung der Einzelzellen benötigt werden, wird das Lot durch die an der Oberfläche der Zwischenschicht auftretenden Kapillarkräfte im Fügebereich fixiert. Ein Kriechen des Lots entlang der Elektrolytschicht, das bei der bisher verwendeten Elektrolytschicht mit glatter Oberfläche beobachtet wurde, wird so verhindert. Die durch die Kapillarkräfte bedingte bessere Haftung des Lots auf der Zwischenschicht sorgt auch für eine bessere und stabile Abdichtung der Hochtemperaturbrennstoffzelle.

Das Lot kann auch nach dem Zusammensintern der Bestandteile der Brennstoffzelle eingebracht werden. Dazu wird eine bei Löttemperatur steife Masse aus Lot und YSZ-Pulver anstelle des reinen Lots in den Fügebereich eingebracht. Die Pulvermatrix verhakt sich mit der aufgerauhten Oberfläche der Zwischenschicht und fixiert diese. Die Kapillarkräfte hindern das Lot die Matrix aus YSZ-Pulver zu verlassen.

Der Vorteil der verbesserten Zusammenfügbarkeit mittels des Glaslotes wird, ähnlich wie mit der Zwischenschicht, auch mit einer aufgerauhten Oberfläche der Elektrolytschicht erzielt.

Im folgenden wird der weitere Aufbau einer Hochtemperaturbrennstoffzelle anhand von drei Figuren näher erläutert.
- Figur 1: zeigt eine zwischen zwei Elektrodenschichten eingebettete Elektrolytschicht im schematischen Querschnitt.
- Figur 2: zeigt die gleiche Anordnung mit einer erfindungsgemäßen Zwischenschicht, während
- Figur 3: einen schematischen Querschnitt durch einen Brennstoffzellenstapel zeigt.

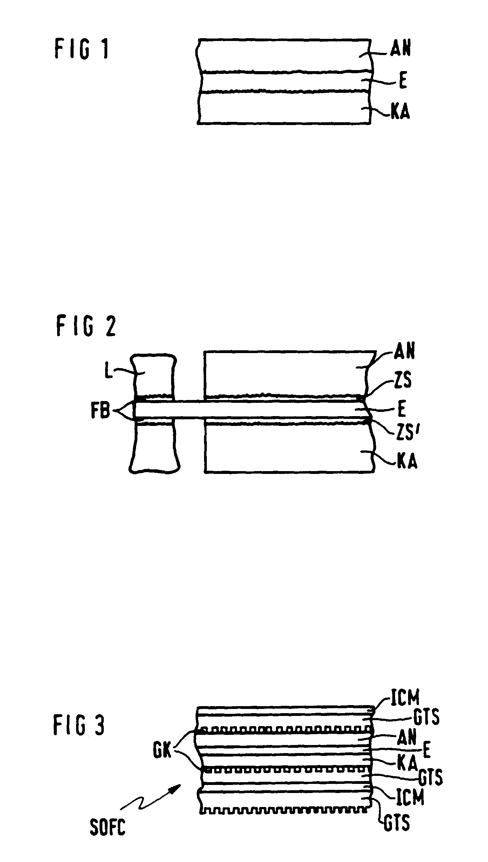

Figur 1 zeigt eine Elektrolytschicht E mit vergrößerter Oberfläche. Sie besteht üblicherweise aus voll stabilisiertem YSZ und wird nach an sich bekannten Verfahren hergestellt. Prinzipiell sind jedoch neben dem YSZ noch weitere ionenleitende Materialien geeignet, sofern diese sich gasdicht sintern lassen und ihre Elektronenleitung vernachlässigbar ist. Weiterhin muß sie bei den Betriebsbedingungen der Hochtemperaturbrennstoffzelle, beispielsweise bei 900°C und 15 Bar Druck sowohl einer reduzierenden als auch einer oxidierenden Atmosphäre gegenüber stabil sein. Eine weitere Anforderung ist die mechanische Stabilität, die zumindest im Verbund mit den Elektrodenschichten gefordert ist. Eine geeignete Dicke der Elektrolytschicht E, die technologisch machbar ist, beträgt 10 bis 15 µm. Allgemein wird jedoch angestrebt, die Elektrolytschicht E so dünn wie möglich zu machen, um die daran abfallende Spannung und damit die Verlustleistung so gering wie möglich zu halten.

Als Material für die Anodenschicht dient üblicherweise ein Cermet aus Nickel und YSZ. Dieses läßt sich mit einem geeigneten Binder zu einer Paste verarbeiten und auf die Elektrolytschicht E aufdrucken. Eine optimale Anodenschicht AN besitzt eine poröse Struktur, bei der Keramik, Nickel und Poren je ein Drittel des Volumens ausmachen. Die Schichtdicke der Anodenschicht AN liegt üblicherweise im Bereich von 50 bis 200 µm.

Die auf der anderen Seite der Elektrolytschicht E aufzubringende Kathodenschicht KA besteht aus einem Mischoxid des Typs ABO₃ aus der Gruppe der Perowskite, bei dem die Komponenten A und B jeweils von einem Element gebildet werden, oder eine stöchiometrisch exakte Mischung mehrerer Kationen darstellen. Beispielsweise kann A ausgewählt sein aus Lanthan, Strontium und Calzium, während B für Mangan, Kobalt oder Nickel stehen kann.

Auch die Kathodenschicht KA wird üblicherweise aufgedruckt, kann aber auch separat als Grünfolie hergestellt werden und nachträglich mit der Elektrolytschicht E verbunden werden. Die Kathodenschicht KA ist sowohl ionen- als auch elektronenleitend und besitzt eine der Anodenschicht AN vergleichbare Dicke.

Figur 2 zeigt die Ausführung der Erfindung, bei der die Elektrolytschicht E eine glatte Oberfläche besitzt, dafür aber mit einer Zwischenschicht ZS versehen wird, welche durch eine geeignete Nachbehandlung porös gemacht, aufgerauht oder mit einer die Oberfläche vergrößernden Struktur versehen ist. Die Verfahren zur Aufbringung der Zwischenschicht und zur Vergrößerung deren Oberfläche sowie eine dafür geeignete Materialauswahl wurden bereits beschrieben. Die Dicke der Zwischenschicht beträgt ca. 1 bis 10 Kornlagen und insgesamt maximal ca. 10 µm.

Die Zwischenschichten ZS können auf einer als Grünfolie vorliegenden Elektrolytschicht E aufgebracht werden. Vor dem Aufbringen der Elektrodenschichten KA und AN wird die zwischen den Zwischenschichten ZS eingebettete Elektrolytschicht E vorzugsweise gesintert, um die poröse Struktur oder zumindest die aufgerauhte oder vergrößerte Oberfläche zu fixieren. Das Aufbringen der Elektrodenschichten AN und KA erfolgt wie bereits anhand von Figur 1 beschrieben. Zu beachten ist noch, daß für die unterschiedlichen Elektrodenschichten unterschiedliche Zwischenschichten ZS vorgesehen sein können.

In Figur 2 ist ein weiterer erfindungsgemäßer Aspekt der Zwischenschicht ZS dargestellt. An den, den Fügebereich FB bildenden Rändern der Keramikfolie (bzw. Elektrolytschicht E) kann die Zwischenschicht abgesetzt sein, so daß sie mit den innen liegenden Schichtbereichen der Zwischenschicht ZS keine Verbindung hat. Auf diesen abgesetzten Fügebereich FB der Zwischenschicht ZS wird auch kein Elektrodenmaterial aufgebracht, da es beim Aufbau des Hochtemperaturbrennstoffzellenstapels zur Aufnahme des Lots L dient. Der Fügebereich FB kann über alle vier Kanten der Elektrolytfolie bzw. -schicht E verlaufen.

Figur 3 zeigt im schematischen Querschnitt einen möglichen Aufbau für einen Brennstoffzellenstapel. Neben dem bereits beschriebenen Verbund Anodenschicht AN/Elektrolytschicht E/Kathodenschicht KA mit den vorhanden Zwischenschichten sind für eine einzelne Brennstoffzelle SOFC im wesentlichen nur noch Gastransportschichten GTS nötig. Um einen ausreichenden Gasdurchfluß von Brennstoffgasen bzw. von Luft durch die Gastransportschichten GTS zu ermöglichen, sind diese entweder entsprechend porös, oder weisen wie in der Figur dargestellt Gaskanäle GK auf. Für eine einzelne Brennstoffzelle muß das Material für die Gastransportschichten GTS lediglich den Betriebsbedingungen widerstehen. Für einen Brennstoffzellenstapel ist jedoch zusätzlich eine elektrische Leitfähigkeit erforderlich, zu der sich in vorteilhafter Weise noch eine ionische Leitfähigkeit gesellen kann. Üblicherweise bestehen die Gastransportschichten GTS aus dem gleichen Material wie die jeweils benachbarte Elektrodenschicht AN oder KA.

Die Gaskanäle GK können durch Extrusion der entsprechenden Grünfolien hergestellt werden. Eine poröse Schicht kann durch Beimischen von ausbrennbaren Kügelchen in den zur Herstellung der Gastransportschichten GTS benötigten Schlicker erreicht werden. Besonders vorteilhaft werden die Gaskanäle jedoch nach dem Lost Wax Verfahren hergestellt, bei dem der gewünschten Form der Gaskanäle entsprechende ausbrennbare Kunststoffstreifen in die Grünfolie mit eingegossen und eingepreßt werden.

Den Abschluß der einzelnen Brennstoffzelle bzw. die Verbindung zur im Stapel benachbarten Einzelzelle bildet eine sogenannte bipolare Platte, auch ICM (Inter Connection Material) genannt, die die Gasräume gasdicht voneinander trennt und durch eine elektronische Leitung die elektrische Verschaltung der Einzelzellen gewährleistet. Das ICM kann aus einer geeigneten keramischen Zusammensetzung bestehen, oder als metallische bipolare Platte ausgebildet sein. Möglich ist es auch, die Gaskanäle in einer metallischen bipolaren Platte zu integrieren. Ein keramisches ICM wird möglichst dünn ausgeführt und kann mit den benachbarten Gastransportschichten GTS zur Erhöhung der Stabilität zu einem Verbundkörper verbunden werden.

Über der bipolaren Platte wird die nächste Einzelzelle aufgebaut, wobei die Orientierung von Anoden und Kathodenschichten so gewählt wird, daß eine Reihenverschaltung der Einzelzellen erreicht wird. Ein ICM grenzt daher sowohl an eine Brennstoffgase führende als auch an eine von Luft durchströmte Gastransportschicht GTS.

Die Anzahl von im Brennstoffzellenstapel übereinander geschichteten Einzelzellen ist beliebig, kann jedoch so eingestellt werden, daß entweder ein maximaler Wirkungsgrad, eine maximale Leistung oder gute mechanische Eigenschaften und Langzeitstabilität gegeben sind.

## Patentansprüche

1. Hochtemperatur-Festelektrolyt-Brennstoffzelle (SOFC) in planarer Mehrschichtbauweise mit als Gastransport-, Elektroden- und Elektrolytschichten ausgebildeten keramischen Folien, bei der die Elektrolytschicht (E) zwischen zwei Elektrodenschichten (AN, KA) eingebettet und eine Anoden- und eine Kathodenseite aufweist, und bei der zwischen der Elektrolytschicht und zumindest einer Elektrodenschicht eine elektronisch und ionisch leitende Zwischenschicht (ZS) mit vergrößerter Oberfläche vorgesehen ist, wobei die Zwischenschicht (ZS) auf der Anodenseite ausgewählt ist aus mit Titan oder Niob dotiertem Zirkonoxid (YSZ) und mit Niob oder Gadolinium dotiertem Ceroxid, und wobei auf der Kathodenseite eine ca. 1 bis 3 µm dicke Zwischenschicht (ZS) aus einem ionisch und elektronisch leitenden Kathodenmaterial vorgesehen ist.

2. Brennstoffzelle nach Anspruch 1,
bei der die Zwischenschicht (ZS) im Fügebereich (FB) der Elektrolytschicht (E) vom übrigen Schichtbereich abgesetzt ist und beim Aufbau eines Hochtemperaturbrennstoffzellenstapels zur Aufnahme des Lots (L) dient.

3. Verfahren zum Herstellen eines Mehrschichtaufbaus aus einer beidseitig mit einer Elektrode (Anoden- bzw. Kathodenschicht) versehenen Elektrolytschicht (E) für eine planare Hochtemperatur-Festelektrolyt-Brennstoffzelle (SOFC),
- bei dem auf zumindest einer glatten Oberfläche der Elektrolytschicht (E) eine eine vergrößerte Oberfläche aufweisende keramische Zwischenschicht (ZS) aus einem ionisch und elektronisch leitenden Material aufgebracht wird,
- bei dem über der Zwischenschicht die Anoden- bzw. Kathodenschicht aufgebracht wird,
- bei dem Zwischenschicht (ZS) und die Elektrodenschicht gemeinsam gesintert werden,
- bei dem die Zwischenschicht (ZS) auf der Anodenseite ausgewählt ist aus mit Titan oder Niob dotiertem Zirkonoxid (YSZ) und mit Niob oder Gadolinium dotiertem Ceroxid,
- bei dem die Zwischenschicht auf der Kathodenseite aus einem ionisch und elektronisch leitenden Kathodenmaterial ausgebildet wird.

4. Verfahren nach Anspruch 3,
bei dem zwischen der Elektrolytschicht (E) und der Anodenschicht (AN) eine poröse Zwischenschicht (ZS) aus Yttriumstabilisiertem, mit Titan oder Niob dotiertem Zirkonoxid erzeugt und anschließend in den Poren mit Nickel imprägniert wird.

5. Verfahren nach Anspruch 4,
bei dem das Imprägnieren der Poren mit chemischen oder elektrochemischen Methoden erfolgt.

6. Verfahren nach Anspruch 4,
bei dem das Imprägnieren in einer gasförmige Nickelverbindungen enthaltenden Atmosphäre erfolgt.

7. Verfahren nach einem der Ansprüche 3 bis 6,
bei dem in die keramische Zwischenschicht (ZS) Körner aus einem ausbrennbaren Material eingebaut und durch die Sinterung wieder ausgebrannt werden, wobei die Oberfläche der Zwischenschicht vergrößert wird.

8. Verfahren nach Anspruch 3,
bei dem die Zwischenschicht (ZS) mit einem Sol/Gel-Verfahren aufgebracht und durch Calcinieren und Sintern zum _{"}Aufreißen" gebracht wird, wobei die Oberfläche der Zwischenschicht vergrößert wird.

9. Verfahren nach einem der Ansprüche 3 bis 7,
bei dem die Zwischenschicht (ZS) durch Siebdruck aufgebracht wird.

10. Verfahren nach einem der Ansprüche 3 bis 9,
bei dem die Zwischenschicht in einer Dicke von 1 - 10 Kornlagen (maximal ca. 10 µm) aufgebracht wird.

## Claims

1. High-temperature solid-electrolyte fuel cell (SOFC) of planar multilayer design having ceramic films formed as gas-transport, electrode and electrolyte layers, in which cell the electrolyte layer (E) is embedded between two electrode layers (AN, KA) and has an anode side and a cathode side, and in which cell an electronically and ionically conducting interlayer (ZS) having increased surface is provided between the electrolyte layer and at least one electrode layer, the interlayer (ZS) on the anode side being selected from titanium-doped or niobium-doped zirconium oxide (YSZ) and niobium-doped or gadolinium-doped cerium oxide, and an approximately 1 to 3 µm thick interlayer (ZS) composed of an ionically and electronically conducting cathode material being provided on the cathode side.

2. Fuel cell according to Claim 1, in which the interlayer (ZS) is disconnected from the remaining layer region in the join region (FB) of the electrolyte layer (E) and serves to receive the solder (L) in constructing a high-temperature fuel-cell stack.

3. Method of producing a multilayer structure composed of an electrolyte layer (E) provided on both sides with an electrode (anode layer and cathode layer, respectively) for a planar high-temperature solid-electrolyte fuel cell (SOFC),
- in which a ceramic interlayer (ZS) which has an increased surface and is composed of an ionically and electronically conducting material is applied to at least one smooth surface of the electrolyte layer (E),
- in which the anode layer or cathode layer is applied on top of the interlayer,
- in which the interlayer (ZS) and the electrode layer are jointly sintered,
- in which the interlayer (ZS) on the anode side is selected from titanium-doped or niobium-doped zirconium oxide (YSZ) and niobium-doped or gadolinium-doped cerium oxide,
- in which the interlayer on the cathode side is formed from an ionically and electronically conducting cathode material.

4. Method according to Claim 3, in which a porous interlayer (ZS) composed of yttrium-stabilized, titanium-doped or niobium-doped zirconium oxide is produced between the electrolyte layer (E) and the anode layer (AN) and is subsequently impregnated with nickel in the pores.

5. Method according to Claim 4, in which the impregnation of the pores is carried out by chemical or electrochemical methods.

6. Method according to Claim 4, in which the impregnation is carried out in an atmosphere containing gaseous nickel compounds.

7. Method according to one of Claims 3 to 6, in which particles composed of a material which can be burnt out are incorporated in the ceramic interlayer (ZS) and are burnt out again by sintering, in which process the surface of the interlayer is increased.

8. Method according to Claim 3, in which the interlayer (ZS) is applied by a sol/gel method and is made to "break up" by calcination and sintering, in which process the surface of the interlayer is increased.

9. Method according to one of Claims 3 to 7, in which the interlayer (ZS) is applied by screen printing.

10. Method according to one of Claims 3 to 9, in which the interlayer is applied in a thickness of 1 - 10 particle layers (not more than approximately 10 µm).

## Revendications

1. Pile à combustible à électrolyte solide haute température (SOFC) à construction multicouches plane, comprenant des feuilles de céramique exécutées en tant que couches de circulation de gaz, couches d'électrode et couches d'électrolyte, dans laquelle la couche d'électrolyte (E) est insérée entre deux couches d'électrode (AN, KA) et comporte un côté anode et un côté cathode, et dans laquelle une couche intermédiaire (ZS) à surface augmentée conduisant les électrons et les ions est prévue entre la couche d'électrolyte et au moins une couche d'électrode, la couche intermédiaire (ZS) située du côté de l'anode étant choisie entre l'oxyde de zirconium (YSZ) dopé au titane ou au niobium et l'oxyde de cérium dopé au niobium ou au gadolinium, et une couche intermédiaire (ZS) faite d'un matériau pour cathode conduisant les ions et les électrons et mesurant de 1 à 3 µm d'épaisseur environ étant prévue du côté de la cathode.

2. Pile à combustible selon la revendication 1, dans laquelle la couche intermédiaire (ZS) est décalée, dans la zone d'assemblage (FB) de la couche d'électrolyte (E), par rapport à la zone du reste de cette couche, et sert à recevoir la soudure (L) lors de la construction d'un empilement de piles à combustible haute température.

3. Procédé de fabrication d'une construction multicouches formée par une couche d'électrolyte (E) pourvue, sur les deux côtés, d'une électrode (couche d'anode resp. de cathode), pour une pile à combustible à électrolyte solide haute température (SOFC) plane,
- dans lequel une couche intermédiaire (ZS) céramique faite d'un matériau conduisant les ions et les électrons et pourvue d'une surface augmentée est appliquée sur au moins une surface lisse de la couche d'électrolyte (E),
- dans lequel la couche d'anode resp. de cathode est appliquée sur la couche intermédiaire,
- dans lequel la couche intermédiaire (ZS) et la couche d'électrode sont frittées ensemble,
- dans lequel la couche intermédiaire (ZS) située du côté de l'anode est choisie entre l'oxyde de zirconium (YSZ) dopé au titane ou au niobium et l'oxyde de cérium dopé au niobium ou au gadolinium,
- dans lequel la couche intermédiaire située du côté de la cathode est formée par un matériau pour cathode conduisant les ions et les électrons.

4. Procédé selon la revendication 3, dans lequel une couche intermédiaire (ZS) poreuse formée d'oxyde de zirconium dopé au titane ou au niobium et stabilisé à l'yttrium est produite entre la couche d'électrolyte (E) et la couche d'anode (AN) et est ensuite imprégnée de nickel dans les pores.

5. Procédé selon la revendication 4, dans lequel l'imprégnation des pores est réalisée au moyen de méthodes chimiques ou électrochimiques.

6. Procédé selon la revendication 4, dans lequel l'imprégnation a lieu dans une atmosphère contenant des composés gazeux de nickel.

7. Procédé selon l'une des revendications 3 à 6, dans lequel des grains faits d'un matériau pouvant se consumer sont intégrés dans la couche intermédiaire (ZS) céramique et sont à nouveau brûlés sous l'effet du frittage, la surface de la couche intermédiaire étant augmentée.

8. Procédé selon la revendication 3, dans lequel la couche intermédiaire (ZS) est appliquée au moyen d'un procédé sol/gel et est amenée à "se fendre" sous l'effet de la calcination et du frittage, la surface de la couche intermédiaire étant augmentée.

9. Procédé selon l'une des revendications 3 à 7, dans lequel la couche intermédiaire (ZS) est appliquée par sérigraphie.

10. Procédé selon l'une des revendications 3 à 9, dans lequel l'épaisseur de la couche intermédiaire appliquée équivaut à 1 - 10 couches de grains (à peu près 10 µm maximum).
